# EUROPEAN PATENT APPLICATION

(11) **EP 1 548 655 A2**
(43) Date of publication of application: **29.06.2005**
(21) Application number: 05006719.8
(22) Date of filing: 05.12.2001
(51) Int. Cl.: G07C 9/00

(54) **Remote control device**

(30) Priority: 10.12.2000 DK 200001848
(62) Divisional of application: 01999925.9
(71) Applicant: VKR Holding A/S, 2860 Soeborg (DK)
(72) Inventor: Nielsen, Martin Sandal, 6830 Noerre Nebel (DK)
(74) Representative: Olesen, Kaj

(57) **Abstract**

Remote control device for operation of at least one controllable unit such as a drive unit attached to a moveable part such as a door, a gate, a window, blinds, shutters, or a curtain, an awning or the like. The remote control device comprises a remote control unit (10) and a remote-controlled unit (20) designed in such a manner that the remote control unit may transmit control signals and in that the remote-controlled unit may receive and react upon said control signals. The remote control unit (10) comprises operating means for selecting a remote-controlled unit (20) and the selection of a remote-controlled unit by said remote control unit is indicated by an activation of the selected remote-controlled unit. Furthermore, said operating means comprise selecting means (44, 45) that are adapted for visual signalling. Further, the remote control unit (10) and the remote-controlled unit (20) may each contains a master key, and the remote-controlled unit (20) may comprise means for removing its code. The code and the configuration of the remote control unit may be transmitted to an additional remote control unit.

## Description

### Field of the invention

The present invention relates to a remote control device for operation of at least one controllable unit such as a drive unit attached to a moveable part such as a door, a gate, a window, blinds, shutters, or a curtain, an awning or the like, where the remote control device comprises a remote control unit and a plurality of remote-controlled units designed in such a manner that the remote control unit may transmit control signals and in that a remote-controlled unit may receive and react upon said control signals.

### Background technique

In relation to remote control devices, it is commonly known to take steps to ensure that any given remote controlled unit may only be operated by means of a particular remote control unit and that, on the other hand, the activation of any such given remote control unit will not result in (an)other remote-controlled unit or units than those intended being activated.

Thus, it is known to provide a remote control with a code which is transmitted together with a command signal to the unit to be operated. The unit will know the code and upon receipt of the command signal, it will test whether the right code is transmitted and, if this is the case, carry out the desired command. Meanwhile, this technique suffers from the drawback that it is possible to read the transmitted command signals and copy these, after which it will be possible for an unauthorized person to transmit command signals with the correct code to one or more remote-controlled units, whereby such an unauthorized person will e.g. gain access to a building through doors, gates or windows controlled by means of such a remote control.

A system of this kind is known from e.g. German publication No. DE 197 33 405 A. By this remote control system, it is also possible to enter a new code on the remote control, which is in the shape of a hand-held transmitter, and transfer the new code to the remote-controlled unit in such a manner that the remote-controlled unit will subsequently react when a command signal with this new code is transmitted. However, this known system still suffers from the above-mentioned drawback unless the chosen codes is changed quite often and in theory each time a command signal is transmitted which is highly unlikely in practice.

Also, it is known to attach particular addresses to the remote-controlled units in question in cases where a remote control must be used to control more units independently of each other, and these addresses will subsequently form part of the transmitted command signals and result in selective control of the remote-controlled units.

Such a system is known from e.g. WO 95/02231 A concerning a remote control for a lighting arrangement. By this system, it will also be possible to read and copy the transmitted control signals, after which unauthorized control signals may be transmitted.

A further related prior art system is described in EP 0 870 889 A2. This document relates to a keyless motor vehicle entry and ignition system, wherein a number of remote controls may be used for selecting a function for the vehicle to perform, e.g. unlocking the doors, by means of coded signals. The vehicle comprises a microcomputer for controlling these functions, and this microcomputer contains a stored list of unique identification numbers for the remote controls, by means of which the vehicle may be controlled. Further, a unique seed number is allocated to the microprocessor, e.g. the vehicle, and this seed number must also be stored in a storage member of each remote control for controlling the vehicle. However this prior art system has the drawback that it is not suitable for a device comprising a plurality of remote-controlled units since, according to this prior art, a remote controlled unit must have knowledge of identification numbers or the like for the remote controls which may be used for controlling the units. Similarly, the addition or replacement of a remote control in such a prior art system will require a lot of effort since identification number(s) or the like will have to be amended, erased and/or added in all remote-controlled units controlled by the particular remote control(s).

Thus, one of the purposes of the invention is to present a remote control device of the initially mentioned kind with improved security in relation to the remote control devices known within the art.

Another purpose of the invention is to present a remote control device which prevents the codes used by the device from being read and used for e.g. unauthorized operation of the remote control device.

A further purpose of the invention is to provide a remote control device which is flexible with regard to the addition of remote-control units and/or remote controls while maintaining the standard of security.

Another purpose of the invention is to present a remote control device of the initially mentioned kind wherein a remote controlled unit may easily be related to the device, wherein an already installed remote controlled unit may easily be replaced by another remote controlled unit and wherein one or more further remote controls may effortlessly be associated with the device, while simultaneously the high standard of security is maintained.

Yet another purpose of the invention is to present a method of configuration of the kind specified above whereby a remote control device is obtained comprising the desired improved security in relation to the systems known within the art.

Finally, the purpose of the invention is to present a method of configuration, whereby a remote control device is obtained which may prevent the codes used by the device from being read and used for e.g. unauthorized operation of the remote control device.

### The invention

The invention relates to a remote control device for operation of at least one controllable unit such as a drive unit attached to a moveable part such as a door, a gate, a window, blinds, shutters, or a curtain, an awning or the like, where the remote control device comprises a remote control unit and a plurality of remote-controlled units designed in such a manner that the remote control unit may transmit control signals and in that a remote-controlled unit may receive and react upon said control signals, said remote control unit comprising operating means for selecting a remote-controlled unit and wherein the selection of a remote-controlled unit by said remote control unit is indicated by an activation of the selected remote-controlled unit.

In this manner, the user may determine where the selected units are actually located.

Claims 2 to 6 relate to preferable embodiments.

Further, as characterized in claim 7, the invention relates to a remote control unit for selecting and controlling at least one controllable unit such as a drive unit attached to a moveable part such as a door, a gate, a window, blinds, shutters, or a curtain, an awning or the like, said remote control unit comprising operating means for selecting a remote-controlled unit, wherein said operating means comprises selecting means that further are adapted for visual signalling.

Claims 8 to 10 relate to further advantageous embodiments.

According to claim 11, the invention further relates to a remote control device for operation of at least one controllable unit such as a drive unit attached to a moveable part such as a door, a gate, a window, blinds, shutters, or a curtain, an awning or the like, where the remote control device comprises a remote control unit and at least one remote-controlled unit designed in such a manner that the remote control unit may transmit coded control signals and in that a remote-controlled unit may receive and react upon said coded control signals, and wherein said remote control unit and said at least one remote-controlled unit each contains a master key.

This master key is used only under special circumstances, e.g. for the initial configuration. By using this master key during e.g. initial configuration or during a remote-control unit copy-process the security of the operation of the system according to the invention is enhanced.

Claims 12 to 14 relate to further advantageous embodiments.

As characterized in claim 15, the invention also relates to a remote control device for operation of at least one controllable unit such as a drive unit attached to a moveable part such as a door, a gate, a window, blinds, shutters, or a curtain, an awning or the like, where the remote control device comprises a remote control unit and at least one remote-controlled unit designed in such a manner that the remote control unit may transmit coded control signals and in that a remote-controlled unit may receive and react upon said coded control signals, wherein the remote control unit and the remote-controlled unit(s) comprise one and the same code, wherein the remote control unit further contains data concerning the remote-controlled unit(s), e.g. address(es), group configuration(s) etc., and wherein the remote control unit is adapted for transmitting its code to an additional remote control unit upon a special command.

Hereby it is achieved, that since it may be practical to have more than one remote control for a remote control system, e.g. a remote control system of a large building or in a place where more persons need to carry out operations independently of each other, and since it may be practical and/or necessary to have remote controls in reserve at hand if the original one has been misplaced, destroyed or in another manner deactivated, it will hereby be possible to copy the first code, that is the original code, from the original remote control to any other remote control.

Claims 16 to 20 relate to further advantageous embodiments.

As further characterized in claim 21, the invention also relates to a remote control device for operation of at least one controllable unit such as a drive unit attached to a moveable part such as a door, a gate, a window, blinds, shutters, or a curtain, an awning or the like, where the remote control device comprises a remote control unit and at least one remote-controlled unit designed in such a manner that the remote control unit may transmit coded control signals and in that a remote-controlled unit may receive and react upon said coded control signals, wherein the remote control unit and the remote-controlled unit(s) comprise one and the same code, wherein the at least one remote controlled unit comprises means for removing its code.

A code from another remote control cannot be transferred to a remote-controlled unit which already has a code stored in its storage means by means of the initiation procedure which means that a code in a storage means cannot be overwritten. Meanwhile, there may be cases where it must be possible to enter a new code, e.g. when using remote-controlled units which have been used by other remote control devices in connection with a new or other system group. By carrying out e.g. a special procedure in accordance with the invention, the code can be removed and a new code may be entered.

Claims 22 to 25 relate to further advantageous embodiments.

Further purposes are obtained by means of a remote control device for operation of at least one controllable unit such as a drive unit attached to a movable part such as a door, a gate, a window, blinds, shutters or a curtain, an awning or the like, where the remote control device comprises a remote control unit and a remote-controlled unit designed in such a manner that the remote control unit may transmit coded control signals and in that the remote-controlled unit can receive and react upon said coded control signals, and where a remote control device is characterized by the remote control unit and the remote-controlled unit both comprising one and the same code, and by the remote-controlled unit comprising means for generating and transmitting an authorization request signal upon receipt of a command signal from the remote control unit and by the remote control unit comprising means for generating and transmitting a response signal to the authorization request and by the remote-controlled unit comprising means for verification of such a response.

In this manner, security against maloperation and/or unauthorized operation is improved since the remote control unit will require confirmation of the command signal being sent from the correct remote control unit comprising the correct code. Since the completion of an operation requires correct verification of the remote-controlled unit's authorization request, which is controlled by verification in the remote-controlled unit, any attempt of unauthorized operation will require a significant effort and will practically be impossible since the invention will comprise a significant amount of variations in relation to both the authorization request and the required response signal from the remote control unit. Thus, various signal forms may be chosen which vary in accordance with a pattern that cannot be deduced from the signals transmitted between the units and the codes stored in the units may furthermore not be detected by reading the transmitted signals since the form of the authorization requests and response signals is not known.

In a particularly advantageous embodiment the remote-controlled unit's means for generation and transmission of an authorization request signal comprises means for generation of random signals whereby the opportunity to synthesize a response signal to an authorization request signal will practically be non-existent since it will only be possible by systematic or non-systematic testing of numerous possibilities.

According to a preferred embodiment the remote control unit's means for generation and transmission of a response signal to an authorization request signal comprises means for carrying out a coding of at least part of the information of the authorization request signal by means of its code, and the remote-controlled unit's means for verification of the response signal comprises means for carrying out a coding of at least part of the information in the authorization request signal by means of its own code and means for carrying out a comparative procedure where these two coded signals are used.

Thus, the desired security is obtained in an advantageous manner, since no signals will be communicated which will inherently reveal any information of vital interest in respect of security and thus eliminate the possibility of bystanders reading or copying such information. If the code forms part of a signal when the units are communicating, it has been combined with a signal generated by the remote-controlled unit and such a signal will not be repeated but will vary from one operation procedure to another. Read communication signals will thus not reveal neither the code nor the signal generated in the remote-controlled unit.

According to another embodiment the remote-controlled unit comprises encryption means to encrypt said authorization request signal by means of said code in the remote-controlled unit and the remote control unit comprises encryption means for encryption of the response signal by means of said code in the remote-controlled unit, whereby additional security is obtained against maloperation and/or unauthorized operations.

According to another preferred embodiment the remote-controlled unit comprises means for detecting received non-critical command signals and the remote-controlled unit is designed to comply with such non-critical command signals. Hereby, confirmation and subsequent verification will only be required in cases involving a critical command so that simplified control is obtained in relation to all other commands. Critical commands may be commands that effect opening of a door, a gate or a window leading into a building. Furthermore, it is possible to determine whether a command is critical or not depending on the time of day, e.g. that opening of a window or a door constitutes an uncritical command if carried out on a working day during normal working hours while being critical at all other times. The criterion for detection will be stored in the remote-controlled unit, e.g. in the form of identification of critical or non-critical commands, and possibly also in the form of time limits important in relation to detection. In the latter case, the remote control will furthermore comprise a time indicator e.g. in the form of a watch and/or calendar function serving as reference.

The remote control device may preferably comprise one or more remote-controlled unit(s), where each remote-controlled unit may comprise a unique address, whereby the respective remote-controlled units may be operated selectively by means of the remote control unit.

Preferably, the remote control device may comprise two or more remote control units where each of said at least two or more remote control units comprises one and the same code. In this manner, it is possible to use several separate remote control units in the same system, e.g. by several different persons, and it will also be possible to keep remote control units in reserve if a remote control should disappear or malfunction.

A remote control device according to a preferred embodiment may comprise two or more remote-controlled units and at least one remote control unit wherein addresses for the remote-controlled units are stored, said addresses being divided into one or more groups. In this manner, it will be possible to operate all units in the group at the same time which results in improved user-friendliness and extensive system flexibility.

According to a method for configuration of a remote control device designed to operate at least one remote-controlled unit such as a drive unit attached to a moveable part such as a door, a gate, a window, blinds, shutters, a curtain or an awning or the like, where the remote control device comprises a remote control unit and a remote-controlled unit designed in such a manner that the remote control unit may transmit coded control signals and in that the remote-controlled unit may receive and respond to said coded control signals, whereby provision of one or more remote-controlled units each being provided with an address, whereby provision of a remote control unit being provided with a code and whereby an initiation command from the remote control unit initiating transmission of the respective addresses of one or more of said remote-controlled units which are received and stored in the remote control unit and whereby said code being transmitted to and stored by the remote-controlled unit(s) in question.

This means that the remote control device will be configured in such a manner that all units to be operated by means of the remote control will transfer their respective addresses to the remote control and that a code which is unique to the remote control is simultaneously or subsequently transferred to the respective remote-controlled units so that it is subsequently possible to operate the remote control device in such a manner that it is optimally secured against maloperation and/or unauthorized operation.

Preferably, said code will be stored by the remote-controlled units that have not previously been provided with a code. In this manner, it is possible to prevent previously configured units to be used in connection with a remote control system, e.g. a system in the immediate vicinity of the system to be configured and within communication-wise reach of the remote control unit forming part of the new system, from unintentionally being transferred to the new system.

This may preferably be obtained by said code being stored by the respective remote-controlled units in such a manner that it cannot be replaced by a new configuration.

Furthermore, the remote-controlled units may be designed in such a manner that once a code has been stored by a remote-controlled unit, such a unit will not be brought into a configuration state again if it receives an initiation command from a remote control unit. Thus, the unit will not transfer its address to the remote control unit and will therefore not be provided with any code by the remote control unit.

Preferably, the data transferred during the initial configuration and in particular the secret code may be coded by a special master key. Hereby it is prevented that the data and in particular the secret code may accidentally and/or unintentionally be received and read by other that the intended receiver(s) during the initial configuration. Such a master key may be contained in and be identical and unique for equipment of a certain type, e.g. Velux remote control equipment, certain remote control equipment intended for special purposes, etc. This master key may be used only under special circumstances, e.g. for the initial configuration or for copying data from a master remote control to a new or slave remote control. By using this master key during special configuration processes the security of the operation of the system according to the invention is enhanced.

According to another preferable embodiment of the method, further a group configuration of the remote control device is made, said remote control unit being brought in a programming state, and said one or more addresses stored in the remote control unit being attached to one of one or more user-specified groups. Thus, the opportunity to operate more units at the same time is obtained in a preferable manner, just as it becomes possible for the user to make such a division into groups in a manner which is completely adapted to the requirements of the user whereby user-friendliness and flexibility have been improved further.

According to an embodiment of the method, further additional steps may be carried out whereby a code already stored by a remote-controlled unit may be removed by means of a reset procedure carried out on said remote-controlled unit prior to initiation of configuration of a remote control device in which said remote-controlled unit forms part or is to form part.

In this manner, it is possible to obtain that a remote-controlled unit which has previously been used by one remote control device and which is now to be used by a new device to be configured, or to obtain that a remote-controlled unit, wherein a code has been stored by mistake, are brought into a state in which the code has been removed from the memory in such a manner that the remote-controlled unit may now form part of the configuration on equal terms with the other units. The reset procedure may be configured in such a manner that it will not be immediately possible for e.g. unauthorized persons to carry out this procedure. For example, the procedure could be carried out inside the unit, or at least partly inside, so that the unit must be opened, an operating part placed on the unit may be activated in a particular manner or some kind of key may be used.

### Figures

The invention will be explained in detail in the following with reference to the drawings on which
- fig.1: shows a remote control device according to an embodiment of the invention in general and schematic form,
- fig. 2: shows an initiation procedure at configuration of a remote control device according to an embodiment of the invention,
- fig. 3: shows a method of use of a remote control device according to an embodiment of the invention, and
- fig. 4: shows an embodiment of a remote control unit according to the invention.

### Embodiments

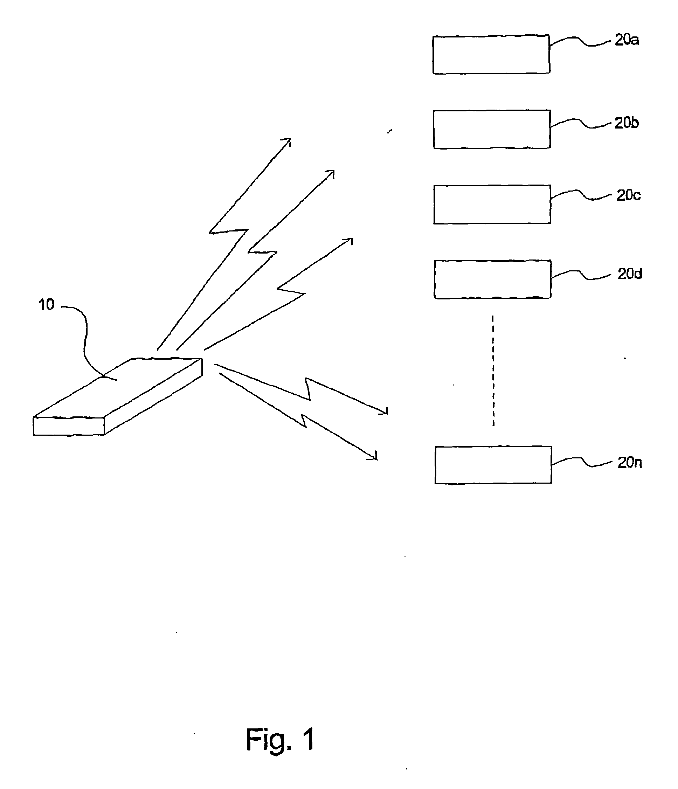

Fig. 1 shows a remote control device according to an embodiment of the invention, said remote control device comprising a remote control unit 10, which also will be referred to as the remote control in the following, and a number of remote-controlled units 20a-20n. As will also appear from the following, one single remote-controlled unit may be involved, just as any number of remote-controlled units may be involved.

If a number of remote-controlled units is involved, these may be immediately and simultaneously accessible for operation by means of the remote control unit 10 as illustrated or they may be individually operated. However, the remote-controlled units will often be divided into groups where all units in a group may be operated simultaneously.

Thus, the remote control unit 10 will comprise means such as remote control buttons, operating keys or the like, for selection of one or more units to be controlled, just as it will comprise means for selection and/or programming of the parameters to be controlled.

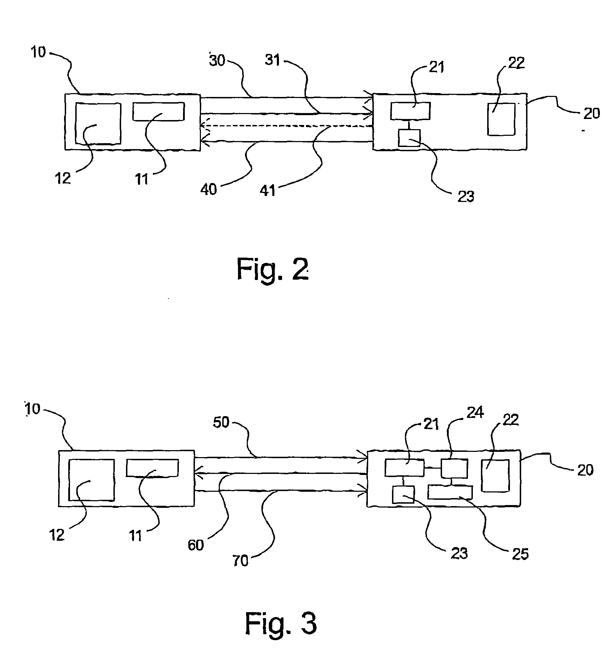

Fig. 2 shows how an initial configuration of the system takes place and includes installation of a code in connection with the installation of a remote control device according to an embodiment of the invention. When manufactured, the remote control 10 is provided with a secret code stored in a storage means 11 in the remote control. This code is unique for this remote control unit and no other finished remote control has the same code.

By activation of an initiation procedure, the remote control 10 will transmit an initiation command by means of a signal 30 to all remote-controlled units 20 that are in proximity of the remote control 10 communication-wise, i.e. which may be able to communicate with the remote control 10. If the remote-controlled units 20, of which only one is illustrated in fig. 2 for practical reasons, receiving this signal 30 have not previously been provided with a code, they will transmit a response signal 40 to the remote control unit 10. This response signal 40 is a confirmation to the remote control unit 10 and contains information in the form of an address which the remote-controlled unit in question has stored in a storage means 22. This address has been assigned to the remote-controlled unit during manufacture of the unit and is unique to the unit in question which means that two or more units will not have the same address.

The address is received by the remote control unit 10 and stored in an address storage means 12 together with the addresses of other remote-controlled units 20a-20n in the remote control device which comprises the system of the remote control and the remote-controlled units controlled by the remote control. In addition to the address, the signal 40 may contain information of e.g. the type of the remote-controlled unit, e.g. a door, a window, an awning, blinds etc., controlled by means of the remote-controlled unit. This information may also be stored in the address storage means 12 in the remote control 10 or in another storage means but in such a manner that the information may be coupled with the address in question.

Upon receipt and storage of an address and possibly other information of the remote-controlled unit(s) in question, the remote control unit 10 will transmit its secret code by means of a signal 31 to the respective unit(s) of the remote-controlled units 20a-20n which have now been identified by the remote control through their respective addresses. These units will each receive and store the code in question in a storage means 21 and potentially, and as illustrated, each remote-controlled unit 20 may transmit a confirmation signal 41 back to the remote control unit.

In order to avoid that the secret code is accidentally and/or unintentionally received and read by other that the intended receiver(s) during the initial configuration, the secret code may be coded by a special master key. This master key is contained in and is identical and unique for equipment of a certain type, e.g. Velux remote control equipment, certain remote control equipment intended for special purposes, etc. This master key is used only under special circumstances, e.g. for the initial configuration. By using this master key during initial configuration the security of the operation of the system according to the invention is enhanced.

If, as previously mentioned, a code has already been stored in the storage means 21 of a remote-controlled unit 20, this unit will not respond to the transmitted signal 30 and the address of such a remote-controlled unit will thus not be transferred to the remote control unit 10.

In practice, the exchange of addresses and of the code may take place by the exchange of an address and of the code being completed between one remote-controlled unit 20 and the remote control unit before carrying out the exchange between the following remote-controlled units 20 and the remote control unit and this initiation process may continue sequentially until the last of the remote-controlled units having received the initiation command 30 has transmitted its address and received the code. The sequence of configuration of the respective units may be determined in various ways and may e.g. be determined by the units being susceptible to the initiation signal 30 at different time intervals which may be mutually independent and potentially randomly divided between the units. The unit with which the susceptible time interval and the initiation signal 30 first coincide will thus be configured first etc.

The remote-controlled units 20 which have now stored the code will thus be remotely controlled only by means of the remote control 10 containing the same code as will be explained later. The operation of the individual remote-controlled units by means of the remote control can now principally be carried out as will also be explained later.

As already explained, a code from another remote control 10 cannot be transferred to a remote-controlled unit 20 which already has a code stored in its storage means 21 by means of the initiation procedure which means that a code in a storage means 21 cannot be overwritten. Meanwhile, there may be cases where it must be possible to enter a new code, e.g. when using remote-controlled units which have been used by other remote control devices in connection with a new or other system group. By carrying out a special procedure, it will be possible to reset or erase the storage means 21, e.g. by activating an operation button 23 which is not ordinarily accessible. An example of this may be removal of a top cover or another action requiring intervention with the system or by the operation button 23 being manipulated in a certain manner.

The method of operation of a the remote-controlled unit will now be explained with reference to fig. 3 which shows a remote control 10 and a remote-controlled unit 20 as in fig. 2, with the understanding that there may, of course, be more remote-controlled units 20 to be controlled by the remote control 10.

On the remote control 10, a remote-controlled unit 20 or a group of remote-controlled units 20 must be selected, which will be explained later, and a command, such as an action, a programming or the like, must be carried out. A command signal 50 containing information of the address(es) of the chosen remote-controlled unit(s) 20 and information of the command in question are transmitted from the remote control 10 to the remote-controlled units 20. They receive the command signal and the remote-controlled unit(s) with the right address(es) will initiate further steps before the command can be completed. First and foremost, the remote-controlled unit(s) in question will decide upon previously determined criteria if the command in question is a command requiring authorization. If not, the command is carried out but if the command is a so-called critical command requiring authorization, the remote-controlled unit will transmit a challenge signal in the form of an authorization request signal 60 to the remote control 10. A critical command may include a command which is of importance to security, e.g. the command may be one of opening doors, gates, or windows located in a so-called face wall of a building or the like.

This challenge signal contains a sequence of digits comprising one or more random digits produced by means of a random generator 24. The challenge signal is received by the remote control 10 in which a coding of at least part of the information of the challenge signal by means of the code stored in the code storage means 11 of the remote control will take place and the result will be returned to the remote-controlled unit in the form of an authorization response 70. This is received by the remote-controlled unit 20 wherein the received authorization response or at least a part hereof is compared in a verification unit 25 to a signal produced by coding of the sequence of digits produced in the remote controlled unit 20 by means of the code stored in the storage means 21. If the two signals or rather corresponding parts of the two signals, for example the coded parts, are identical or concordant, the remote-controlled unit will know for sure that the command is coming from the right remote control, or in other words from the remote control containing the same code as the remote-controlled unit.

As mentioned, the generated sequence of digits may be made by means of a random generator 24, but may also be made in other ways which will be obvious to a person skilled within the art but it should preferably involve a sequence of digits which changes each time. The number of digits in the signal may be determined with respect to the desired security level and with respect to the equipment, available resources in the remote control and/or the remote-controlled unit(s) etc. The method of coding of the sequence of digits and/or signals comprising such a sequence by means of a code may be chosen from a variety of solutions which will be obvious to a person skilled within the art.

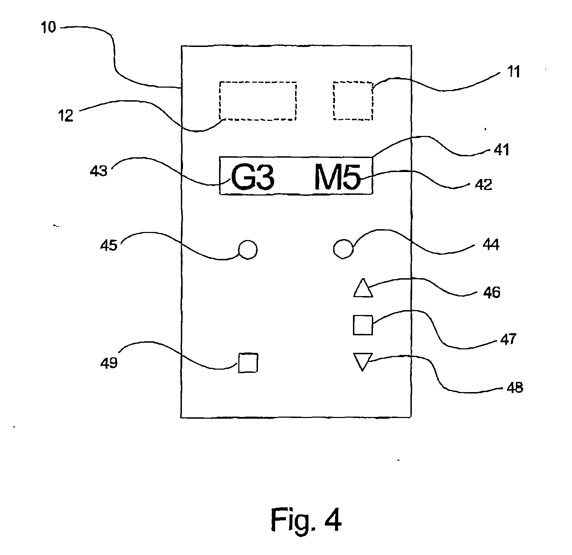

As previously mentioned, the remote-controlled units 20 configured by means of a remote control unit 10 may be divided into groups to be controlled, i.e. operated, simultaneously. This will be explained in the following with reference to fig. 4 which shows an example of an embodiment of the remote control 10, in particular in relation to the operative embodiment.

As previously mentioned, the remote control 10 comprises a storage means 11 wherein the code is stored and a storage means 12 wherein addresses and possibly the type of remote-controlled unit 20a-20n which at the initiation procedure has received the code from the remote control 10 and is operated by means of this, have been stored.

Furthermore, the remote control 10 comprises the possibility of showing the remote-controlled unit(s) which may be controlled by the remote control and this is illustrated by a display 41 in the shown example. On the display 41, the identification 42 of a particular, chosen remote-controlled unit has been shown as unit M5 in this example. Furthermore, fig. 4 shows that the same display may show the identification 43 of a particular, chosen group shown as unit G3 in this example. It will be obvious to a person skilled within the art that several other ways of indicating a chosen group and/or a selected remote-controlled unit than those illustrated may be chosen in practice.

In addition to the two identifications in 42 and 43, additional signalling means have been included, 44 and 45 respectively, which may e.g. be visual indications such as light emitting diodes (LEDs) or other forms of signalling lamps. These signalling means may also be designed in such a manner that they may be used to select between group 43 and unit 42, e.g. in the form of push buttons or touch-sensitive keys.

Furthermore, the remote control 10 has been provided with a keyboard 46, 47, and 48 to be used when selecting groups and/or remote-controlled units, said keyboard further being used when controlling the remote-controlled units 20a-20n. This keyboard comprises a key 46 for increasing a displayed value, a key 48 for reducing a displayed value, and a key 47, a stop button, for selection of a shown value and potentially stopping an initiated increase or reduction of a parameter or another initiated command such as e.g. initiated movement, e.g. opening of a window.

Finally, the remote control 10 has been provided with an operation button 49 to be used when initiating configurations of the remote control device. This operation button 49 may also be used to initiate the initiation procedure which constitutes the initial configuration, since the button 49, when used for this purpose, may be operated in a special way or in a special combination with other keys for initiation of this rare, occurring procedure.

By configuration of the remote control device in groups, the remote control 10 must first be brought into a group configuration state. This may e.g. be done by activating the operation button 49, preferably in a special manner, e.g. in combination with one or more other keys, whereby unintended activation will be avoided. Hereafter, the group configuration may be carried out just as the composition of a group or more groups may be studied and potentially changed.

Firstly, activation of a selection of remote-controlled units 20a-20n is carried out which may e.g. be done by means of the indicator/key 44. Once the selection of units has been activated, the indicator 44 will indicate this e.g. by blinking. Hereafter, a selection of the various remote-controlled units may be made, e.g. M1-Mn corresponding to the units 20a-20n by scrolling up and down by means of the buttons 46 and 48, respectively. Once a desired unit is displayed, e.g. a motor for opening/closing of a window, such as motor M5 as shown by 42, it may be selected by pressing the stop button 47. The indicator 44 can now indicate that a unit has been selected, e.g. by constant light. Furthermore, the remote control device will now indicate to the user which remote-controlled unit has just been selected on the display 41 by activating the remote-controlled unit in question for a brief period or in another manner indicate selection of the item. For example, a remote-controlled unit which has been selected and relates to the operation of blinds or a window may briefly operate the blinds or open/close the window, respectively. In this manner, the user may determine where the selected units are actually located.

Hereafter, one or more groups G1-Gn may be chosen, in which it is desirable to include the selected unit. Selection and indication may e.g. be made by means of the indicator 45 which will now be active, either by constant light or by blinking. As was the case above with the selection of unit, it is possible to scroll up and down by means of the keys 46 and 48. If a group shown on the display 41 already includes the unit in question, the indicator 45 will indicate this by e.g. blinking. If the remote-controlled unit shown on display 41 is not part of the group, the indicator will also indicate this by e.g. constant light.

If the previously selected unit, e.g. the unit with identification M5 as shown by 42, should be included in the now selected group, e.g. group G3 as shown by 43, this may e.g. be done by activating the stop button 47, after which the indicator 45 will blink and indicate that the previously selected unit has now been transferred to the selected group. If a selected unit already included in the group in question should be removed from the group, this may also be done by activating the stop button 47, after which the indicator 45 will indicate that the unit is removed from the group by constant light.

Correspondingly, other groups may be examined for the unit in question when configuring the group relations, and a new remote-controlled unit may subsequently be chosen as described above, after which a corresponding process may be carried out.

It is, of course, possible to create groups according to specific requirements and it will also be possible to include the same remote-controlled unit 20a-20n in more than one group, if necessary.

As an example, a starting point may be taken from fig. 1 and a group creation consisting of 4 groups, G1-G4 may be imagined, where G1 comprises the remote-controlled units 20b, 20c, and 20e, where group G2 comprises the units 20a, 20c, 20d, 20g and 20h, where group G3 comprises the units 20f, 20i, 20j, 20m, and 20n, and where group G4 comprises the units 20k and 201.

The procedure for group creation may be determined in other ways that that described above and the important issue is that it is possible to select one of the remote-controlled units and that its relations to one or more groups may be created, shown and/or changed. Furthermore, the remote control 10 may be designed in several different ways and by use of a many different options, which will be obvious to a man skilled within the art. For example, the display 41 may be designed to show additional information concerning units 42 and/or groups 43, e.g. user-entered information concerning nature and/or location of a unit etc. Furthermore, the remote control may be designed with additional keyboards, e.g. an alpha-numerical keyboard to be used for inputting and so forth.

As previously mentioned, the codes included in the individual remote controls 10 are unique whereby one and only one remote control may be used to control a system and this is the remote control which has been used at the initiation procedure. Since it may be practical to have more than one remote control for a remote control system, e.g. a remote control system of a large building or in a place where more persons need to carry out operations independently of each other, and since it may be practical and/or necessary to have remote controls in reserve at hand if the original one has been misplaced, destroyed or in another manner deactivated, it will be possible to copy the first code, that is the original code, from the original remote control to any other remote control 10. This takes place by bringing the two remote controls into contact with each other communication-wise and by carrying out a special command, e.g. a key combination or by pressing one key of one of the remote controls (the original remote control or the master remote control) and potentially also include the new remote control (the slave remote control), whereby the code is transferred to the storage means 11 of the new remote control. At the same time, addresses and groups stored in the address storage means 12 are also transmitted to and stored by the new remote control. The initial code of the new remote control may be maintained therein but will be inactive.

In order to avoid that the transferred data, e.g. in particular the secret code is accidentally and/or unintentionally received and read by other than the intended receiver, e.g. the new remote control, the data may be coded during this data transmission by means of the previously mentioned master key, which is unique for the type of equipment used, e.g. Velux remote control equipment, certain remote control equipment intended for special purposes, etc. As mentioned above this master key is used only under special circumstances, e.g. for the initial configuration. By using this master key during this copy-process the security of the operation of the system according to the invention is enhanced.

If one of the remote controls has disappeared in a manner which causes concern in relation to security, the original code must be removed from all remote-controlled units. As explained above, this is done by manipulation of the command key 23 (fig. 3). Subsequently, one of the original slave remote controls in which the original code is maintained as described above may be used to initiate the initiation procedure whereby its code, which is new in relation to the system, will be transferred to all remote-controlled units with no code. This slave remote control, which is now the master control will, however, still comprise its original group configuration which may be transferred to the other slave remote controls together with the new master code as described above.

In the above, communication between the included units has not been described in detail and it should be understood that communication may take place in any form suitable, i.e. by means of e.g. infrared communication, ultrasound communication or electromagnetic communication. Furthermore, the remote control is illustrated in relation to doors, gates, windows and various kinds of light opening covers but it should be understood that numerous other fields of application where there is a need for operation of one or more elements that do not necessarily have any movable parts, at a distance, selectively and/or in any other manner, are also possible. Finally, it should be noted that the included remote control units do not necessarily have to be designed as hand-held transmitters but may also be designed as stationary units or mobile units that may even be designed in such a manner that they may be placed stationary, or in any other manner known or obvious to a person skilled within the art.

## Claims

1. Remote control device for operation of at least one controllable unit such as a drive unit attached to a moveable part such as a door, a gate, a window, blinds, shutters, or a curtain, an awning or the like, where the remote control device comprises a remote control unit (10) and a plurality of remote-controlled units (20a - 20n) designed in such a manner that the remote control unit (10) may transmit control signals and in that a remote-controlled unit (20) may receive and react upon said control signals, said remote control unit (10) comprising operating means for selecting a remote-controlled unit (20) and wherein the selection of a remote-controlled unit by said remote control unit is indicated by an activation of the selected remote-controlled unit.

2. Remote control device according to claim 1, wherein said activation of the selected remote-controlled unit (20a - 20n) comprises an activation of a drive unit attached to a moveable part such as a door, a gate, a window, blinds, shutters, or a curtain, an awning or the like.

3. Remote control device according to claim 1 or 2, wherein said activation of the selected remote-controlled unit takes place for a brief period.

4. Remote control device according to claim 1, 2 or 3, wherein said activation of the selected remote-controlled unit comprises a brief movement of a movable part.

5. Remote control device according to claim 4, wherein said brief movement of a movable part comprises two sequential activities, e.g. an opening/closing of a window etc.

6. Remote control device according to one or more of claims 1 to 5, wherein said selection of a remote-controlled unit by said remote control unit involves a scrolling operation on a display and a subsequent selection by manipulation of a button (47).

7. Remote control unit (10) for selecting and controlling at least one controllable unit such as a drive unit attached to a moveable part such as a door, a gate, a window, blinds, shutters, or a curtain, an awning or the like, said remote control unit (10) comprising operating means (44, 45, 46, 47, 48) for selecting a remote-controlled unit (20a - 20n), wherein said operating means comprises selecting means (44, 45) that further are adapted for visual signalling.

8. Remote control unit (10) according to claim 7, wherein said selecting means (44, 45) are designed as push buttons or touch-sensitive keys and wherein said visual signalling is provided by a light emitting diode (LED) or another form of a signalling lamp.

9. Remote control unit (10) according to claim 7 or 8, wherein said visual signalling may be in the form of a constant light or a blinking light.

10. Remote control unit (10) according to claim 7, 8 or 9, wherein said visual signalling may indicate that it is possible to perform a selection and that a selection has been performed, respectively.

11. Remote control device for operation of at least one controllable unit such as a drive unit attached to a moveable part such as a door, a gate, a window, blinds, shutters, or a curtain, an awning or the like, where the remote control device comprises a remote control unit (10) and at least one remote-controlled unit (20a - 20n) designed in such a manner that the remote control unit (10) may transmit coded control signals and in that a remote-controlled unit (20) may receive and react upon said coded control signals, and wherein said remote control unit (10) and said at least one remote-controlled unit (20a - 20n) each contains a master key.

12. Remote control device according to claim 11, wherein said master key serves a coding key during an initial configuration, during which e.g. a code specific for the remote control unit (10) is transmitted to a remote-controlled unit (20).

13. Remote control device according to claim 11, wherein said master key serves a coding key when data is transferred from said remote control unit (10) to an additional remote control unit, said data comprising for example a code specific to the remote control unit, addresses of remote-controlled units and/or group configuration(s).

14. Remote control device according to claim 11, 12 or 13, wherein said master key is unique for a specified group of remote control units and remote-controlled units, e.g. units manufactured by a specific manufacturer, units for special purposes etc.

15. Remote control device for operation of at least one controllable unit such as a drive unit attached to a moveable part such as a door, a gate, a window, blinds, shutters, or a curtain, an awning or the like, where the remote control device comprises a remote control unit (10) and at least one remote-controlled unit (20a - 20n) designed in such a manner that the remote control unit (10) may transmit coded control signals and in that a remote-controlled unit (20) may receive and react upon said coded control signals, wherein the remote control unit (10) and the remote-controlled unit(s) (20) comprise one and the same code, wherein the remote control unit (10) further contains data concerning the remote-controlled unit(s), e.g. address(es), group configuration(s) etc., and wherein the remote control unit (10) is adapted for transmitting its code to an additional remote control unit upon a special command.

16. Remote control device according to claim 15, wherein the remote control unit (10) is further adapted for transmitting said data concerning the remote-controlled unit(s) to said additional remote control unit upon said special command

17. Remote control device according to claim 15 or 16, wherein said special command involves activation of one or more operating keys on the remote control unit.

18. Remote control device according to claim 17, wherein said special command further involves activation of one or more operating keys on the additional remote control unit.

19. Remote control device according to one or more of claims 15 to 18, wherein said additional remote control unit contains a code, which is unique for said additional remote control unit, which code is made inactive when the code of the first remote control unit has been received.

20. Remote control device according to one or more of claims 15 to 19, wherein said remote control unit (10) contains a master key for coding said code and said data concerning the remote-controlled unit(s) when it is transmitted to said additional remote control.

21. Remote control device for operation of at least one controllable unit such as a drive unit attached to a moveable part such as a door, a gate, a window, blinds, shutters, or a curtain, an awning or the like, where the remote control device comprises a remote control unit (10) and at least one remote-controlled unit (20a - 20n) designed in such a manner that the remote control unit (10) may transmit coded control signals and in that a remote-controlled unit (20) may receive and react upon said coded control signals, wherein the remote control unit (10) and the remote-controlled unit(s) (20) comprise one and the same code, wherein the at least one remote controlled unit (20) comprises means for removing its code.

22. Remote control device according to claim 21, wherein said means for removing the code from the at least one remote controlled unit (20) comprises means for erasing or resetting a storage means (21).

23. Remote control device according to claim 22, wherein said means for erasing or resetting said storage means (21) comprises an operation button (23), which is not normally accessible.

24. Remote control device according to claim 23, wherein said operation button (23) on said at least one remote controlled unit (20) is located under a cover.

25. Remote control device according to claim 23 or 24, wherein said operation button (23) on said at least one remote controlled unit (20) is adapted to be manipulated in a specific manner.
